## Europäisches Patentamt

## European Patent Office

## Office européen des brevets

(19)

(11) Numéro de publication: **0 255 428 B1**

(12)

# FASCICULE DE BREVET EUROPEEN

(45) Date de publication du fascicule du brevet:
08.08.90

(51) Int. Cl.⁵: **F16D 65/22**

(21) Numéro de dépôt: 87401696.7

(22) Date de dépôt: 21.07.87

(54) Mécanisme d'actionnement de frein à tambour à commande par coin et frein à tambour le comportant.

(30) Priorité: 30.07.86 FR 8611030

(43) Date de publication de la demande:
03.02.88 Bulletin 88/5

(45) Mention de la délivrance du brevet:
08.08.90 Bulletin 90/32

(84) Etats contractants désignés:
DE ES GB IT

(56) Documents cités:
EP-A- 0 139 445
EP-A- 0 201 139
DE-A- 2 159 024
DE-A- 2 356 075
FR-A- 2 217 593

(73) Titulaire: BENDIX France Société Anonyme dite:,
126, rue de Stalingrad, F-93700 Drancy(FR)

(72) Inventeur: Démeautis, Chantal, 6, rue des Francs
Aubiers Bât 6, Porte 139, 2e ét., F-93140 Bondy(FR)

(74) Mandataire: Luziau, Roland et al, Division Technique
Service Brevets Bendix Europe 126, rue de Stalingrad,
F-93700 Drancy(FR)

ACTORUM AG

## Description

La présente invention est relative à un mécanisme d'actionnement de frein à tambour et, plus particulièrement, à un tel mécanisme à commande par coin.

Un type de frein à tambour à commande par coin bien connu, parfois appelé "frein simplex", comprend ordinairement deux segments incurvés munis de garnitures, chaque segment étant articulé à une extrémité sur un plateau solidaire de la fusée sur laquelle est montée une roue associée d'un véhicule. Entre les deux extrémités non articulées des segments qui sont placées en regard, on trouve un mécanisme d'actionnement propre à pousser les garnitures contre le tambour lors d'un freinage, par l'intermédiaire de pistons agissant en sens inverse sur les segments pour les écarter l'un de l'autre. Le mécanisme comprend une pièce en forme de coin mobile transversalement par rapport aux axes des pistons. Chacune des deux faces du coin agit sur l'extrémité d'un des pistons placée en regard (comme décrit dans DE-A 2 356 075 ≙GB-A 1 447 358).

Lorsque le conducteur du véhicule exerce une pression sur la pédale de frein, un cylindre ou vase à diaphragme pousse le coin entre les pistons de manière à écarter progressivement ceux-ci l'une de l'autre. Les pistons repoussent alors eux-mêmes les segments et leurs garnitures contre le tambour du frein, pour arrêter par frottement la rotation du tambour et de la roue associée. Les pistons sont ordinairement équipés de dispositifs de rattrapage de jeu pour compenser l'effet de l'usure progressive des garnitures.

Dans les freins à tambour à segments articulés, il s'ajoute à cette usure normale une cause d'usure particulière qui résulte de la structure même du frein. En effet, lors d'un freinage, l'un des segments est "tendu" tandis que l'autre est "comprimé". Le segment situé en amont du coin, par rapport au sens de rotaton du tambour est "tiré" par le tambour à partir de son point d'articulation, tandis que le segment aval est comprimé par le frottement du tambour, vers son point d'articulation. La compression du segment aval est amplifiée, dans un frein à tambour à commande par coin classique, par le fait que le coin lui-même transmet au segment comprimé l'effort qu'il reçoit du segment tendu, du fait que celui-ci tend à pivoter vers l'intérieur du tambour. Il en résulte une usure différente des garnitures de frein, au détriment de la garniture du segment comprimé qui s'use plus vite que celle du segment tendu. Une usure mieux répartie sur les deux garnitures permettrait d'espacer les démontages du frein nécessaires au remplacement des garnitures usées. Actuellement il faut démonter le frein à chaque fois que la garniture du segment comprimé est usée, alors que celle du segment tendu est encore en bon état. Il en résulte un intervalle de temps moyen, entre deux entretiens successifs du frein, que l'on souhaite abaisser pour diminuer le coût de la maintenance de ce frein.

La présente invention a donc pour but de réaliser un mécanisme d'actionnement de frein à tambour à commande par coin, conçu de manière à empêcher une usure différentielle des garnitures des segments.

La présente invention a aussi pour but de réaliser un tel mécanisme conçu pour réduire les frais de maintenance d'un tel frein.

On atteint ces buts de l'invention avec un mécanisme d'actionnement de frein à tambour, comprenant un coin placé entre deux extrémités en regard de deux pistons actionnant chacun l'un des deux segments portant des garnitures, ce coin étant mobile entre une première position où il presse ces garnitures contre le tambour du frein et une deuxième position où ces garnitures sont écartées du tambour, le coin agissant sur les pistons par l'intermédiaire de rouleaux de commande montés sur une cage à rouleaux placée sur le coin, au moins un rouleau d'appui étant monté sur la cage pour porter sur le corps du mécanisme et sur le coin, respectivement, de manière à guider le coin entre ses première et deuxième positions, mécanisme caractérisé en ce que le coin et la cage sont dissymétriques, la cage portant, du côté d'un seul des deux pistons, au moins un rouleau d'appui coopérant avec deux chemins de roulement associés parallèles et formés sur le corps et le coin respectivement, du côté de ce piston.

D'autres caractéristiques et avantages de la présente invention apparaîtront à la lecture de la description qui va suivre associée à l'examen du dessin annexé, dans lesquel :

- la Figure 1 est une vue axiale, en coupe partielle, d'un frein à tambour équipé du mécanisme d'actionnement suivant la présente invention ;
- la Figure 2 est une vue en coupe, prise suivant le trait de coupe 2-2 de la Figure 3, du mécanisme d'actionnement à commande par coin suivant l'invention ;·
- la Figure 3 est une vue en coupe, agrandie, du mécanisme de la figure 2, prise suivant le trait de coupe 3-3 de la figure 2, et
- les Figures 4 et 5 sont des vues en coupe d'une cage à rouleaux formant partie du mécanisme suivant l'invention, prises suivant les traits de coupe 4-4 et 5-5 de ces figures, respectivement.

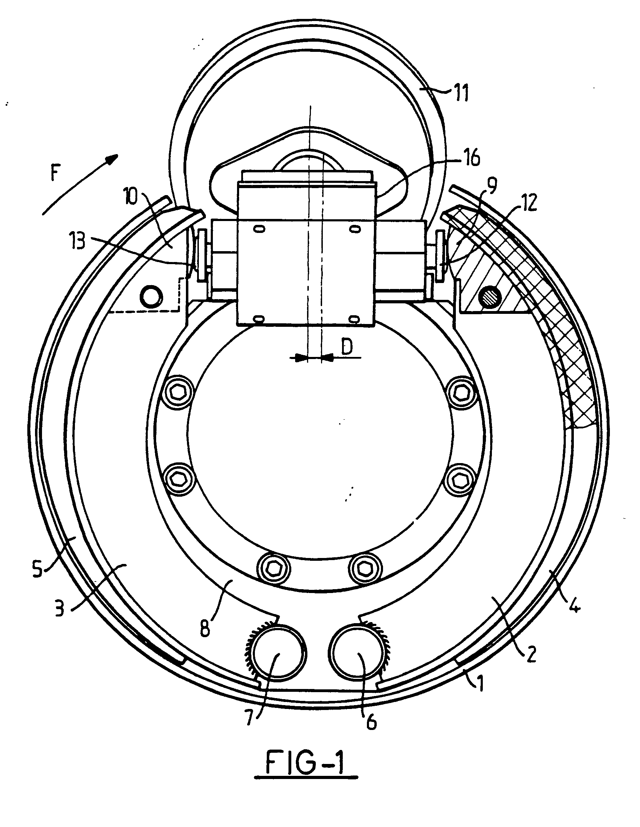

On se réfère à la Figure 1 où l'on a représenté un frein à tambour équipé du mécanisme à commande par coin suivant l'invention. Le frein comprend un tambour 1 à l'intérieur duquel sont logés deux segments 2,3 munis de garnitures 4,5, respectivement. Les segments 2,3 sont articulés sur des axes 6,7 respectivement, solidaires d'un plateau 8 lui-même fixé par des boulons sur la fusée de la roue d'un véhicule équipé du frein suivant l'invention.

Le mécanisme d'actionnement à commande par coin suivant l'invention est installé entre les extrémités libres 9,10 des segments 2,3 respectivement. Ce mécanisme est enfermé dans un corps 16 lui-même solidaire de la fusée. Il comprend un coin, qui sera décrit en détail dans la suite, monté sur une tige de commande elle-même déplacée par un actionneur pneumatique tel qu'un vase à diaphragme, comme il est bien connu dans la technique. Le coin se déplace ainsi sur une trajectoire sensiblement transversale au sens de rotation du tambour, pour repousser progressivement des têtes de piston 12,13 qui écartent les segments 2,3 l'un de l'autre lors d'un freinage, de manière à plaquer les garnitures 4,5 contre la périphérie interne du tambour, qui est alors freiné par frottement.

Lors d'un freinage, la roue et le tambour tournant dans le sens de la flèche F (Figure 1), il est clair que la garniture 5 et le segment 3 associé sont tirés par l'effet du frottement, dans le sens de cette flèche, ce qui a pour effet de faire pivoter le segment 3 vers l'intérieur autour de son axe d'articulation 7. Tout au contraire le segment "aval" 2, (par rapport à la position du coin) et la garniture 4 associée sont comprimés, également dans le sens de la flèche F, vers l'axe d'articulation 6 du segment 2, par ce même frottement de la garniture 4 contre le tambour. Quand un tel frein est équipé d'un mécanisme à commande par coin classique, dans lequel le coin peut fléchir sur son axe du fait du porte-à-faux de la tête de coin, il est clair que le coin transmet sur le piston de commande du segment "aval" l'effort qui lui est appliqué par le segment "amont" du fait de la rotation de ce dernier. Il en résulte alors un frottement plus important de la garniture du segment comprimé sur le tambour, qui conduit à une usure de cette garniture qui est plus rapide que celle du segment tendu. La fréquence des interventions d'entretien est alors liée à la vitesse d'usure de la garniture du segment comprimé.

La présente invention a pour but d'abaisser cette fréquence d'entretien par l'obtention d'une usure équilibrée des garnitures des deux segments.

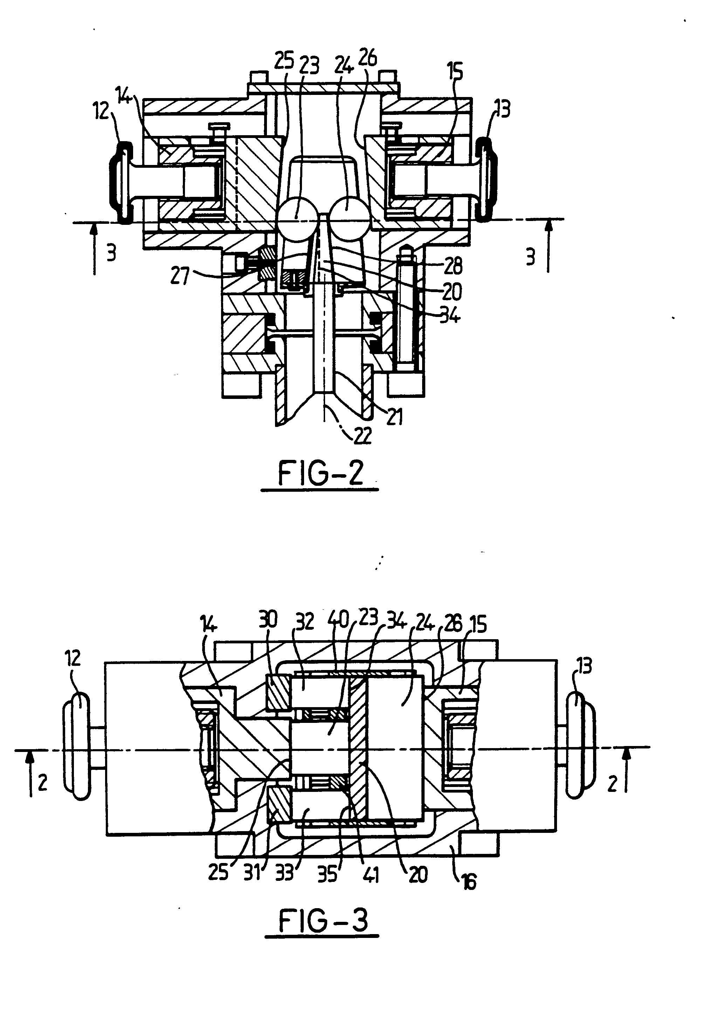

On se réfère aux Figures 2 et 3 où il est clair que le mécanisme suivant l'invention comprend un coin 20 monté par une tige de commande 21 actionnée par le vase à diaphragme 11 (Figure 1) suivant une direction 22 transversale à l'axe des têtes de piston 12, 13. Le coin 20 s'insère entre des rouleaux 23, 24 qui roulent d'une part sur des rampes 25, 26 formées à une extrémité de chacun de deux pistons 14, 15 respectivement et, d'autre part, sur des rampes parallèles 27, 28 formées sur deux faces opposées du coin.

Quand le conducteur du véhicule appuie sur la pédale de frein, le vase à diaphragme 11 repousse le coin vers le haut (du point de vue de la Figure 2) ce qui a pour effet de faire remonter les rouleaux 23, 24 sur les rampes 25, 26 en les obligeant à s'écarter de l'axe du coin. Il en résulte que les pistons 14, 15 s'écartent l'un de l'autre en pressant les garnitures 4, 5 contre le tambour 1 (Figure 1). Il y a alors freinage par frottement du tambour et de la roue associée, jusqu'à l'arrêt de leur rotation, si besoin est.

Lors de ce freinage, le pivotement du segment 3 a pour effet d'appliquer un effort sur la tête de piston 13, transversal à la direction du déplacement du coin 20. Cet effort se transmet à travers le rouleau 24 et le coin 20 jusqu'au rouleau 23 qui s'appuie sur la rampe 25 du piston 14. On comprend alors que si, classiquement, aucun moyen d'équilibrage de cet effort n'est prévu, l'effort sera transmis par la tête de piston 12 au segment comprimé 2 et à sa garniture 4 dont l'usure en sera accélérée.

Suivant la présente invention, on supprime cet inconvénient en équipant le mécanisme d'actionnement de moyens d'appui qui assurent un guidage rectiligne du coin 20 pour empêcher la transmission par le coin d'un effort transversal à sa direction de déplacement, du segment tendu vers le segment comprimé.

Sur la figure 3 il apparaît que ces moyens d'appui sont constitués par des chemins de roulement 30, 31, solidaires du corps 16 du mécanisme d'actionnement et par des rouleaux d'appui 32, 33, respectivement, interposés entre le coin 20 et ces chemins, ces rouleaux étant de même diamètre et sensiblement coaxiaux au rouleau central 23 de commande, de part et d'autre de celui-ci. A la différence de ce rouleau central qui roule sur une rampe 27 inclinée sur l'axe du coin et formée sur une face de celui-ci, les rouleaux d'appui 32, 33 roulent sur des chemins de roulement 34, 35 parallèles à l'axe du coin (le chemin 34 est représenté en tireté à la Figure 2). Comme, d'autre part, les chemins de roulement 30, 31 solidaires du corps 16 sont aussi parallèles à l'axe du coin et à sa direction 22 de déplacement, il est clair que l'axe du coin ne peut s'écarter de cette direction et fléchir vers la gauche (du point de vue de la Figure 2) sous l'action d'un effort transversal résultant de la tension du segment 3. Tout au contraire un tel effort sera équilibré par des réactions de résultante égale à cet effort et de sens opposé, nées à l'interface des chemins de roulement 30, 31 et des rouleaux d'appui 32, 33 respectivement. Ainsi la compression du segment 4 et de sa garniture ne sera pas renforcée par cet effort, contrairement à ce que l'on observe dans les freins à tambour à commande par coin classiques. L'usure de la garniture 4 de ce segment en sera diminuée et l'intervalle de temps entre deux interventions d'entretien augmenté.

On remarquera que l'agencement de rouleaux représenté aux Figures 2 et 3 n'est pas symétrique par rapport à l'axe du coin: en face du piston 15, on trouve seulement le rouleau de commande 24, sans rouleau d'appui. Cette disposition est justifiée par le fait que les efforts de freinage sont développés le plus souvent alors que le véhicule circule en marche avant. L'usure différentielle des garnitures que l'on corrige par la présente invention affecte donc les garnitures d'une manière dissymétrique et on peut donc tenir normalement pour négligeable celle qui résulte des reinages opérés alors que le véhicule circule en marche arrière, généralement à faible vitesse. Il n'y a donc pas lieu de prévoir des moyens d'appui de part et d'autre du coin.

Cette observation permet de réduire l'encombrement du mécanisme suivant l'invention, dans un emplacement où il est important d'être économe de ce point de vue. En effet, l'efficacité des moyens d'appui du mécanisme suivant l'invention est conditionnée par un renforcement de la partie du corps 16 qui supporte les chemins de roulement 30, 31. Suivant un mode de réalisation préféré de l'invention, ceux-ci sont réalisés en acier dur et rapportés dans des rainures creusées dans le corps 16, comme représenté à la Figure 3. L'épaisseur de la partie du corps 16 qui entoure ces rainures est renforcée.

Ces mesures, rendues nécessaires pour accroître la résistance mécanique du corps au niveau des rouleaux d'appui 32, 33, augmentent légèrement l'encombrement du mécanisme, comme cela apparaît sur la Figure 1 où on voit que l'axe du coin, est décalé d'une distance D par rapport au plan vertical médian du tambour.

Le mécanisme dissymétrique suivant l'invention limite l'incidence de cet accroissement d'encombrement.

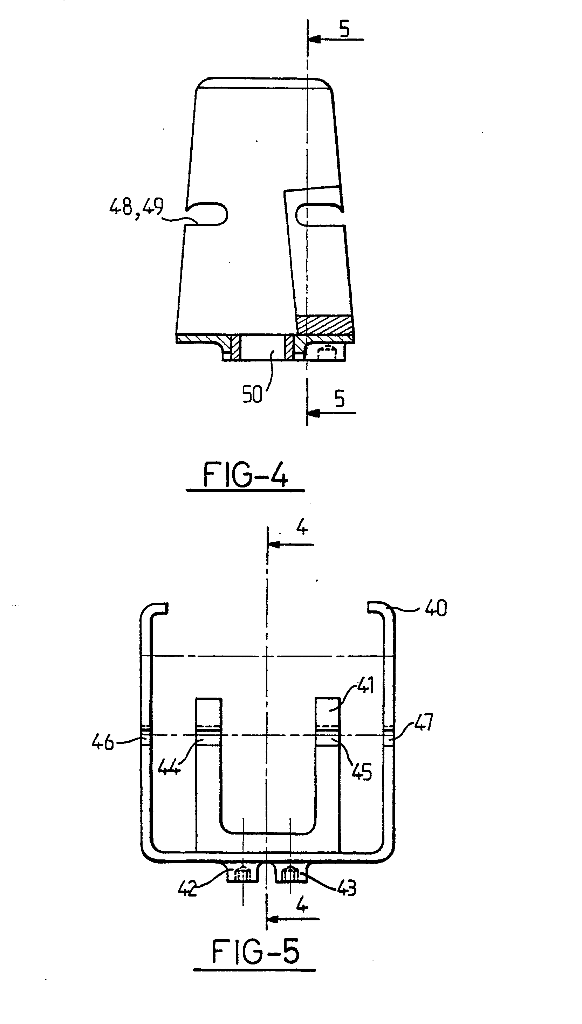

Les rouleaux utilisés, d'appui ou de commande, sont montés dans une cage à rouleaux représentée aux Figures 4 et 5. La cage 40 prend la forme d'un étrier en "U" qui reçoit un deuxième étrier 41 également en forme de "U", mais de plus petites dimensions. L'étrier 41 est fixé sur la cage 40 par des vis BTR en 42, 43, par exemple. L'étrier 41 comprend deux bras parallèles percés de deux boutonnières ouvertes alignées 44, 45. Dans le même alignement, la cage 40 est percée de deux autre boutonnières ouvertes 46, 47. Sur la Figure 4 il apparaît en outre deux autres boutonnières 48, 49 destinées à servir de paliers pour le rouleau 24.

Les rouleaux 23, 32, 33 sont montés à rotation sur la cage 40, dans les boutonnières 44, 45, 46 et 47. On remarquera que l'étrier 41 présente des bras d'épaisseur beaucoup plus importante que celle des bras de la cage 40. En effet, les boutonnières 44,45 percées dans l'étrier 41 doivent être suffisamment épaisses pour servir chacune de palier pour les axes en regard de deux rouleaux adjacents 32,23 et 23,33 respectivement, comme il apparaît sur la Figure 3. Les rouleaux 23,32,33 sont ainsi montés sensiblement coaxiaux sur la cage 40, alors que le rouleau d'appui 24 leur fait face de l'autre côté du plan médian de la cage, en tourillonnant dans les boutonnières 48,49 (voir Figure 4). La cage est elle-même montée sur le coin 20 qui pénètre dans la cage par une ouverture 50 pour venir s'appuyer sur les rouleaux, entre le rouleau 24 et les rouleaux alignés 23,32,33.

L'extension horizontale (du point de vue de la Figure 4) des boutonnières autorise un débattement des rouleaux de commande 23,24 dans cette direction, sous l'action du coin 20.

Bien entendu on pourrait réaliser les moyens d'appui du mécanisme suivant l'invention sous bien d'autres formes, sans sortir du cadre de l'invention. Par exemple, le coin pourrait être guidé dans des rainures usinées dans le corps du mécanisme. Des plaquettes à aiguilles installées entre le coin et le corps diminuent les frottements. Des rouleaux à roulements à aiguilles pourraient aussi être disposés dans ces rainures, pour assurer le guidage du coin.

Dans une autre variante du mécanisme suivant l'invention, un même rouleau s'appuie à la fois sur le corps du mécanisme et sur la rampe du piston adjacent, pour remplir les fonctions d'appui et de commande des rouleaux distincts du mode de réalisation des figures 2 à 5.

## Revendications

1. Mécanisme d'actionnement de frein à tambour comprenant un coin (20) placé entre deux extrémités en regard de deux pistons (14, 15) actionnant chacun l'un de deux segments (2, 3) portant des garnitures (4, 5) ce coin (20) étant mobile entre une première position où il presse ces garnitures contre le tambour (1) du frein et une deuxième position où ces garnitures sont écartées du tambour, le coin (20) agissant sur les pistons (14, 15) par l'intermédiaire de rouleaux de commande (23, 24) montés sur une cage à rouleaux (40) placée sur le coin, au moins un rouleau d'appui (32, 33) étant monté sur la cage (40) pour porter sur le corps (16) du mécanisme et sur le coin (20), respectivement, de manière à guider le coin entre ses première et deuxième positions, caractérisé en ce que le coin (20) et la cage (40) sont dissymétriques, la cage portant, du côté d'un seul des deux pistons (14, 15), au moins un rouleau d'appui (32, 33) coopérant avec deux chemins de roulement associés (30, 31, 34, 35) parallèles et formés sur le corps (16) et le coin (20) respectivement, du côté de ce piston.

2. Mécanisme conforme à la revendication 1, caractérisé en ce que la cage à rouleaux (40) porte, d'un côté de l'axe du coin, deux rouleaux d'appui (32, 33) associés chacun à deux chemins de roulement, ces deux rouleaux d'appui (32, 33) étant placés chacun en regard d'un des deux extrémités d'un même rouleau de commande (23), la cage portant, de l'autre côté de l'axe du coin, un rouleau de commande unique (24) d'encombrement axial sensiblement égal à celui de l'ensemble des trois rouleaux (32, 33, 23).

3. Mécansime conforme à la revendication 2, caractérisé en ce que les rouleaux de commande (23, 24) sont montés à rotation sur la cage dans des paliers en forme de boutonnières (44, 45, 48, 49) autorisant un débattement des rouleaux parallèlement à l'axe des pistons.

4. Mécanisme conforme à la revendication 3, caractérisé en ce que les paliers en forme de boutonnières (44, 45) du rouleau de commande (23) servent aussi de paliers aux rouleaux d'appui (32, 33), respectivement.

5. Mécanisme conforme à l'une quelconque des revendications précédentes, caractérisé en ce que les chemins de roulement définissent pour le coin une trajectoire rectiligne sensiblement parallèle à son axe.

6. Frein à tambour pour roue de véhicule à sens de rotation préférentiel, caractérisé en qu'il comprend un mécanisme conforme à l'une quelconque des revendications précédentes dans lequel les rouleaux d'appui et les chemins de roulement associés sont agencés du côté du segment "aval", lors d'un freinage de la roue du véhicule quand celle-ci tourne dans le sens préférentiel.

## Claims

1. Actuating mechanism for a drum brake, comprising a wedge (20) placed between two facing ends of two plungers (14, 15) each actuating one of two shoes (2, 3) carrying linings (4, 5), this wedge (20) being movable between a first position where it presses these linings against the drum (1) of the brake and a second position where these linings are away from the drum, the wedge (20) actuating the plungers (14, 15) by means of actuating rollers (23, 24) mounted on a roller cage (40) placed on the wedge, at least one bearing roller (32, 33) being mounted on the cage (40) to bear on the body (16) of the mechanism and on the wedge (20), respectively, so as to guide the wedge between its first and second positions, characterized in that the wedge (20) and the cage (40) are unsymmetrical the cage carrying, on the side of only one of the two plungers (14, 15), at least one bearing roller (32, 33) interacting with two associated parallel rolling races (30, 31, 34, 35) formed on the body (16) and the wedge (20) respectively, on the side of this plunger.

2. Mechanism in accordance with Claim 1, characterized in that the roller cage (40) carries, on one side of the wedge axis, two bearing rollers (32, 33), each associated with two rolling races, each of these two bearing rollers (32, 33) being placed facing one of the two ends of the same actuating roller (23), the cage carrying, on the other side of the wedge axis, a single actuating roller (24) whose axial dimensions are substantially equal to those of the combination of the three rollers (32, 33, 23).

3. Mechanism in accordance with Claim 2, characterized in that the actuating rollers (23, 24) are mounted rotatably on the cage in bearings in the form of oblong holes (44, 45, 48, 49) permitting the rollers a play in parallel with the axis of the plungers.

4. Mechanism in accordance with Claim 3, characterized in that the bearings in the form of oblong holes (44, 45) of the actuating roller (23) also serve as bearings for the bearing rollers (32, 33), respectively.

5. Mechanism in accordance with any one of the preceding claims, characterized in that the rolling races define a rectilinear trajectory for the wedge, substantially parallel to its axis.

6. Drum brake for a vehicle wheel with a preferred direction of rotation, characterized in that it comprises a mechanism according to any one of the preceding claims, in which the bearing rollers and the associated rolling races are arranged on the "trailing" shoe side, on braking the vehicle wheel when the latter turns in the preferred direction.

**Patentansprüche**

1. Betätigungsvorrichtung für Trommelbremse mit einem Spreizkeil (20), der zwischen zwei Enden gesetzt ist, zwei Kolben (14, 15) gegenüberliegend, von denen jeder einen der beiden die Beläge (4, 5) tragenden Bremsbacken (2, 3) betätigt, wobei dieser Spreizkeil (20) zwischen einer ersten Stellung, in der er diese Beläge gegen die Bremstrommel (1) drückt, und einer zweiten Stellung, in der diese Beläge von der Trommel abgedrückt werden, beweglich ist, und der Spreizkeil (20) auf die Kolben (14, 15) über Antriebsrollen (23, 24) wirkt, die auf einen auf den Spreizkeil gesetzten Rollenkäfig (40) montiert sind, wobei mindestens eine Tragrolle (32, 33) auf den Käfig (40) montiert ist, um jeweils auf dem Körper (16) der Vorrichtung und auf dem Spreizkeil (20) aufzuliegen, um somit den Spreizkeil zwischen seiner ersten und zweiten Stellung zu führen, dadurch gekennzeichnet, daß der Spreizkeil (20) und der Käfig (40) asymmetrisch sind, wobei der Käfig auf der Seite eines einzigen der beiden Kolben (14, 15) mindestens eine Tragrolle (32, 33) trägt, die mit zwei parallelen beigeordneten Laufbahnkreisen (30, 31, 34, 35), die jeweils auf dem Körper (16) und dem Spreizkeil (20) auf der Seite dieses Kolbens ausgebildet sind, zusammenwirkt.

2. Vorrichtung nach Anspruch 1, dadurch gekennzeichnet, daß der Rollenkäfig (40) auf einer Seite der Spreizkeilachse zwei Tragrollen (32, 33) trägt, von denen jede zwei Laufbahnkreisen beigeordnet ist, wobei jede dieser beiden Tragrollen (32, 33) gegenüber einem der Enden einer gleichen Antriebsrolle (23) gesetzt wird und der Käfig auf der anderen Seite der Spreizkeilachse eine einzige Antriebsrolle (24) mit einem axialen Raumbedarf trägt, der etwa dem der Gesamtheit der drei Rollen (32, 33, 23) entspricht.

3. Vorrichtung nach Anspruch 2, dadurch gekennzeichnet, daß die Antriebsrollen (23, 24) auf den Käfig drehend in knopflochförmigen Lagern (44, 45, 48, 49) montiert sind, die im Ausschlagen der Rollen parallel zur Achse der Kolben gestatten.

4. Vorrichtung nach Anspruch 3, dadurch gekennzeichnet, daß die knopflochförmigen Lager (44, 45) der Antriebswalze (23) auch den Tragwalzen (32, 33) jeweils als Lager dienen.

5. Vorrichtung nach einem der vorhergehenden Ansprüche, dadurch gekennzeichnet, daß die Laufbahnkreise für den Spreizkeil einen geradlinigen Weg abgrenzen, der etwa parallel zu seiner Achse ist.

6. Trommelbremse für Fahrzeugrad mit bevorzugter Drehrichtung, dadurch gekennzeichnet, daß sie eine Vorrichtung umfaßt, die einem der vorhergehenden Ansprüche entspricht und in dem die Tragrollen und die beigeordneten Laufbahnkreise auf der Seite der "abwärts" gelegenen Bremsbacke angeordnet sind, wenn bei einer Bremsung des Fahrzeugrades dieses sich in der Vorzugsrichtung dreht.

FIG-1

FIG-2

FIG-3

48,49

5

5

50

<u>FIG-4</u>

4

40

41

46

47

44

45

42

43

4

<u>FIG-5</u>